# EUROPÄISCHE PATENTSCHRIFT

(11) **EP 2 764 930 B1**
(45) Veröffentlichungstag und Bekanntmachung des Hinweises auf die Patenterteilung: **15.06.2016**
(21) Anmeldenummer: 13154522.0
(22) Anmeldetag: 08.02.2013
(51) Int. Cl.: B09B 1/00, F24J 1/00, F24J 3/08, F28D 21/00

(54) **Anlage und Verfahren zum Behandeln einer Deponie**
Apparatus and method for treating a landfill
Installation et procédé de traitement d'une décharge

(43) Veröffentlichungstag der Anmeldung: 13.08.2014
(73) Patentinhaber: BAUER Umwelt GmbH, 86529 Schrobenhausen (DE)
(72) Erfinder: Tidden, Frank, Dr., 86525 Glonn (DE)
(74) Vertreter: Wunderlich, Rainer

(56) Entgegenhaltungen:
- CA-A1- 2 635 368
- FR-A1- 2 959 001
- JP-A- H0 960 983
- US-A- 4 258 780

## Beschreibung

Die Erfindung betrifft eine Anlage und ein Verfahren zum Behandeln einer Deponie mit einem Deponiekörper aus Abfallstoffen.

Deponien dienen der zeitlich unbegrenzten Lagerung von Abfällen. Abhängig von den Arten von Abfallstoffen bestehen unterschiedliche Deponietypen, deren Klassifizierung sich nach dem Abfallrecht richtet. Trotz eines allgemeinen Bestrebens zur Reduzierung der Abfallmenge, einer Intensivierung des Recyclings sowie einer Vorbehandlung der Abfälle durch Verbrennung besteht weiterhin ein erheblicher Bedarf an Deponien. Darüber hinaus besteht eine Vielzahl von Alt-Deponien, welche geschlossen sind.

Auf Siedlungsabfalldeponien in Deutschland lagern ca. 2,5 Milliarden Tonnen Haushalts- und Industrieabfälle sowie Bauschutt. Im Hinblick auf die steigenden Rohstoff- und Energiepreise besteht das Bestreben, auch bestehende Halden zur Ressourcengewinnung heranzuziehen. So wird etwa der Gehalt von 750 Millionen Tonnen Hausmüll und hausmüllartigem Gewerbeabfall ohne Vorwendeabfälle auf einen Heizwert von 2300 TW/h Energie, 26 Millionen Tonnen Eisenschrott, 850.000 Tonnen Kupferschrott und etwa 500.000 Tonnen Aluminiumschrott geschätzt. Neben einer möglichen Verwertung von Deponien und deren Inhaltsstoffen ist jedoch darauf zu achten, dass durch Deponien keine Beeinträchtigung der Umwelt erfolgt. Dies gilt insbesondere hinsichtlich eines möglichen Austretens von Sickerwasser in umgebenden Boden oder Grundwasser sowie des Austretens von Deponiegasen in die Atmosphäre.

Ein bekanntes Verfahren zur Nutzung von Deponien besteht darin, methanhaltiges Deponiegas, welches durch Abbauprozesse der Abfallstoffe in dem Deponiekörper entstehen kann, aufzufangen und einer thermischen Verwertung in einer Brennervorrichtung zuzuführen. Die gewonnene Wärme kann insbesondere zu Heizzwecken eingesetzt werden.

Die CA 2 635 368 A1 beschreibt ein Verfahren und ein System zum Abführen von Wärmeenergie aus großen Mengen an kommunalem Feststoffabfall in Deponien, um die gewonnene Energie zu nutzen. Die Extraktion und Überführung der Wärme erfolgt passiv, ohne einen externen Energieeintrag.

Die JP H09-60983 A offenbart einen Wärmetauscher für Untertage mit einer Mehrzahl von wärmeaustauschenden konzentrischen Duplexröhren, die in dem Boden vertikal in einem Abstand von zumindest 5 m eingebracht sind. Ein Innenrohr ist konzentrisch in ein Außenrohr eingesetzt, so dass ein Wärmemedium eingeleitet und abgezogen werden kann, welches zwischen dem Innenrohr und dem Außenrohr fließt und geothermische Energie aufnimmt.

Die FR 2 959 001 A1 beschreibt eine Anlage zum Transport von Wärmeenergie geothermischen Ursprungs, mit einem Wärmetauscher, der über einer Wasserkanalisation angeordnet ist, um zur Erwärmung von umgebenden Einrichtungen beizutragen.

Die US 4,258,780 A offenbart ein gravitationsangetriebenes Dualkreislaufwärmeleitungssystem mit oberen und unteren Leitungen, die ein Wärmeübertragungsfluid enthalten und durch eine Reihe von gravitationsangetriebenen Wärmerohren verbunden sind. Die Enden der Wärmerohre erstrecken sich im Wesentlichen über den gesamten inneren Durchmesser der Fluid enthaltenden Leitungen und die Wärmerohre enthalten ein zweites Wärmeübertragungsfluid in Isolation von dem ersten Wärmeübertragungsfluid. Das System befindet sich im Boden eingebettet unterhalb der Frostlinie und ist mit einem Wärmepumpensystem verbunden.

Der Erfindung liegt die **Aufgabe** zugrunde, eine Anlage und ein Verfahren zum Behandeln einer Deponie anzugeben, mit welchen eine verbesserte Verwertung von Deponien erreicht werden.

Die Aufgabe wird zum einen durch ein Verfahren mit den Merkmalen des Anspruchs 1 und zum anderen durch eine Anlage mit den Merkmalen des Anspruchs 9 gelöst. Bevorzugte Ausgestaltungen der Erfindung sind in den jeweils abhängigen Ansprüchen angegeben.

Die erfindungsgemäße Anlage zum Behandeln einer Deponie ist dadurch gekennzeichnet, dass eine Vielzahl von Wärmetauscheinrichtungen in den Deponiekörper eingebracht ist und dass durch die Wärmetauscheinrichtungen ein Übertragungsfluid leitbar ist, durch welches Wärme aus dem Deponiekörper abführbar und/oder in den Deponiekörper zuführbar ist.

Die Erfindung beruht auf der Erkenntnis, dass aufgrund biologischer und/oder chemischer Abbauprozesse der Abfallstoffe im Deponiekörper auch über längere Zeiträume Wärme erzeugt wird. Diese führt zu einer gegenüber der Umgebung erhöhten Temperatur des Deponiekörpers, wobei abhängig vom Deponietyp und den gelagerten Abfallstoffen Temperaturen des Deponiekörpers zwischen 20 und 60°C erreicht werden können. Bei Messungen in Deponien wurden sogar bereichsweise Höchsttemperaturen von 80 bis 90°C ermittelt.

Durch das Einbringen von Wärmetauscheinrichtungen kann diese Wärme aus dem Deponiekörper abgeführt und einer Nutzung, etwa zu Heizzwecken, zugeführt werden. Alternativ kann beispielsweise zur Kühlung eines Gebäudes, eines Prozesses oder einer Infrastruktureinrichtung über die Wärmetauscheinrichtungen Wärme in den Deponiekörper eingebracht werden. Da es sich bei einer Deponie um ein künstliches, nicht-natürliches Objekt handelt, erfolgt durch diese Wärmeeinbringung keine Beeinträchtigung der schützenswerten Natur. Vielmehr kann durch eine Wärmeeinbringung in den künstlichen Deponiekörper zum einen Wärme für eine spätere Rückgewinnung gespeichert und zum anderen eine Verstärkung mikrobiologischer Abbauprozesse der Abfallstoff im Deponiekörper angeregt werden. Hierdurch kann eine Steigerung der Deponiegasbildung bewirkt werden. Die ist insbesondere dann vorteilhaft, wenn das Deponiegas aufgefangen und einer thermischen Verwertung zugeführt wird.

Die Wärmetauscheinrichtungen können bereits beim Aufbau der Deponie schichtweise in den Deponiekörper eingebracht werden oder nachträglich, etwa durch Bohrungen im Deponiekörper angebracht werden.

Die Erfindung lässt sich sowohl bei Deponien für Siedlungsabfälle mit einem Anteil organischer Abfallstoffe als auch für andere Deponieformen, etwa für Müllverbrennungsschlacken und Sonderabfälle nutzen, bei denen etwa durch chemische Prozesse exotherme Reaktionen ablaufen. Dies gilt beispielsweise bei der Reaktion von Brandkalk in Müllverbrennungsschlacken mit Wasser.

Die Wärmetauscheinrichtungen werden nach der Erfindung ausschließlich in den Deponiekörper eingebracht, das heißt dass diese eine untere dichte Deponiesohle nicht durchdringen. Hierdurch wird die Gefahr von Undichtigkeiten und des Austrittes von Sickerwasser aus der Deponie vermieden. Vorzugsweise wird ein Verdrängungsbohren eingesetzt, bei welchem kein oder kaum Aushubmaterial anfällt. Das Material aus der Bohrung wird seitlich in die Bohrungswand verdrängt, wobei sich durch eine Dichteerhöhung auch noch die Wärmeleitfähigkeit des umgebenden Deponiematerials verbessert.

Nach einer Ausführungsform der Erfindung ist es besonders vorteilhaft, dass die Wärmetauscheinrichtungen in dem Deponiekörper in Bereichen angeordnet sind, in welchen verstärkte mikrobiologische und/oder chemische Abbauprozesse gegeben oder zu erwarten sind. Dies erlaubt eine besonders hohe spezifische Wärmeausbeute aus der Deponie. Zudem können etwa durch eine gezielte Abfuhr von Wärme aus Bereichen mit hoher Temperatur eine Vergleichmäßigung des Temperaturprofiles in dem Deponiekörper erreicht werden. Auf diese Weise lassen sich Abbauprozesse in dem Deponiekörper durch eine gewisse Temperatureinstellung steuern, so dass etwa unerwünschte Überhitzungen oder verstärkte Gasbildungen im Deponiekörper abgefangen werden können. In entsprechender Weise lassen sich auch Bereiche im Deponiekörper mit geringerer Aktivität durch Wärmeeinbringung beeinflussen, um etwa gleiche Abbaugeschwindigkeiten bei organischen Abfallstoffen zu erreichen.

Eine bevorzugte Ausgestaltung der Erfindung besteht weiterhin darin, dass in den Deponiekörper Bohrungen eingebracht sind, in welchen die Wärmetauscheinrichtungen als stabförmige Wärmesonden angeordnet sind. Die stabförmigen Wärmesonden können ähnlich Erdwärmesonden aufgebaut sein und Bündel von Rohren aufweisen, welche jeweils paarweise mit einem bodenseitigen U-Rohr verbunden sind. Besonders bevorzugt ist es nach der Erfindung, dass eine stabförmige Koaxialsonde zum Einsatz kommt, bei welcher eine Zuführung des Vorlaufwassers als Übertragungsfluid in einem ringförmigen Außenkanal erfolgt, während das erwärmte Rücklaufwasser durch ein mittiges Rücklaufrohr abgeleitet wird. Der verbleibende Freiraum zwischen Wärmesonde und Bohrungswand wird mit einer aushärtbaren Suspension, insbesondere einer Bentonitsuspension, ausgegossen. Hierdurch wird eine gute Wärmeleitfähigkeit zum Deponiekörper hergestellt.

Bei einer vertikalen Anordnung der Wärmesonden in Deponiekörpern ist es gemäß einer Weiterbildung der Erfindung vorteilhaft, dass die Wärmesonden einen oberen Abschlussabschnitt aufweisen, durch welchen das Übertragungsfluid zu- und abführbar ist, und dass an dem Anschlussabschnitt eine Entlüftungseinrichtung vorgesehen ist, durch welche Gas aus dem Deponiekörper abführbar ist. Die vertikalen Wärmesonden erstrecken sich dabei bis zu einem unteren Fußbereich des Deponiekörpers, so dass die Bohrungen für die Wärmesonden auch zum Abführen von Deponiegas vorgesehen sein können. Dies erfolgt in definierter Weise durch einen gasdichten Abschluss der Bohrung durch den oberen Anschlussabschnitt an der Wärmesonde. Neben den Anschlüssen für das Übertragungsfluid ist dabei eine spezielle Entlüftungseinrichtung zum Ableiten des Deponiegases vorgesehen.

Eine vorteilhafte Weiterbildung besteht dabei darin, dass an der Entlüftungseinrichtung eine Reinigungseinheit angeordnet ist, durch welche abgeführtes Gas aus dem Deponiekörper gereinigt wird. Die Reinigungseinheit kann einen Filter, insbesondere einen Aktivkohlefilter, umfassen. In einfachen Fällen kann nach dieser Reinigung das Deponiegas an die Umgebungsatmosphäre abgegeben werden. Eine derartige Entlüftungseinrichtung mit Reinigungseinheit ist insbesondere dann sinnvoll, wenn nur mit relativ geringem Anfall an Deponiegas zu rechnen ist. Durch die Reinigungseinheit wird insbesondere eine Geruchsbeeinträchtigung der Umwelt vermieden.

Eine weitere Verbesserung wird erfindungsgemäß dadurch erreicht, dass an der Entlüftungseinrichtung eine Abführleitung vorgesehen ist, durch welche abgeführtes Gas einer weiteren Verwertung zuführbar ist. Im einfachsten Fall könnte ein Austrittsventil vorgesehen sein, durch welches Deponiegas austritt und beim Austritt unmittelbar verbrannt wird. Hierdurch kann umweltschädliches Methangas in Kohlendioxid in einfacher Weise umgewandelt werden. Da methanhaltiges Deponiegas in der Regel durch biologische oder mikrobiologische Abbauprozesse aus organischen Abfallstoffen gebildet wird, handelt es sich hierbei um eine CO₂-neutrale Verbrennung.

Besonders bevorzugt ist es jedoch, dass das aufgefangene Gas über eine Abführleitung einem Sammelbehälter oder unmittelbar einem Brenner zugeführt wird, welcher eine Heizanlage oder eine Kraft-Wärme-Anlage betreibt. Selbstverständlich kann das abgeführte Deponiegas auch gespeichert und für andere industrielle Zwecke, etwa bei chemischen Verfahren, genutzt werden.

Bei einer weiteren Ausführungsform der erfindungsgemäßen Anlage ist vorgesehen, dass der Deponiekörper mit einem Dichtelement abgedeckt ist, dass zum Einbringen der Wärmetauscheinrichtungen Durchgänge durch das Abdichtelement vorgesehen sind, und dass das Abdichtelement gas- und flüssigkeitsdicht mit Anschlussabschnitten der Wärmetauscheinrichtungen verbunden ist. Dies kann insbesondere bei bestehenden und bereits abgeschlossenen Deponien sinnvoll sein, bei welchen bereits ein Deckelement als Abdichtelement angeordnet ist. Dieses Abdichtelement kann insbesondere eine Kunststofffolie sein, welche den Zutritt von Regenwasser in die Deponie verhindern soll. Durch entsprechende Durchgänge in dem Abdichtelement können die Wärmetauscheinrichtungen in den Deponiekörper eingebracht werden. An den oberen Anschlussabschnitten der Wärmetauscheinrichtungen kann eine Verbindungseinrichtung vorgesehen sein, über welche das insbesondere folienförmige Abdichtelement gas- und flüssigkeitsdicht mit der Wärmetauscheinrichtung verbunden werden kann. Es wird so verhindert, dass einerseits durch die Durchgänge der Wärmetauscheinrichtungen Regenwasser in unerwünschter Weise in den Deponiekörper eindringen und andererseits Deponiegas durch die Durchgänge austreten kann.

Nach der Erfindung ist eine Vielzahl von Wärmetauscheinrichtungen definiert in dem Deponiekörper vorgesehen. Dabei ist es erfindungsgemäß, dass eine Pumpeinrichtung und eine Steuereinrichtung vorgesehen sind, mit welchen den Wärmetauscheinrichtungen gezielt Übertragungsfluid zugeführt wird. Es kann so eine gezielte Nutzung besonders warmer Bereiche der Deponie erreicht werden, indem etwa durch die Steuereinrichtung gezielt mehr Wärmeübertragungsfluid in die warmen Bereiche geleitet wird. In umgekehrter Weise können bei der Abgabe von Wärme in den Deponiekörper durch die Steuereinrichtung gezielt kältere Bereiche des Deponiekörpers angesteuert werden. An den einzelnen Wärmetauscheinrichtungen oder an einzelnen Sammel- oder Verteilstellen können Sensoreinrichtungen, insbesondere zur Erfassung der Temperatur des Vor- und des Rücklaufes, vorgesehen sein. Die Steuereinrichtung kann dabei abhängig von einer gewünschten Wärmeab- oder -zufuhr die Leistung der Pumpe steuern und gegebenenfalls über stellbare Ventile die Zu- und Abführung des Wärmeübertragungsfluides, insbesondere von Wasser, zu und von den einzelnen Wärmetauscheinrichtungen steuern.

Grundsätzlich kann das Wärmeübertragungsfluid bei einer entsprechenden Temperatur des Deponiekörpers bereits mit einer solchen Rücklauftemperatur versehen sein, dass das Übertragungsfluid unmittelbar in ein Heizungssystem eingeleitet werden kann. Eine bevorzugte Ausgestaltung der Erfindung liegt aber darin, dass eine Wärmepumpe vorgesehen ist, mit welcher Wärme aus dem Übertragungsfluid abführbar und einer Nutzung zuführbar ist. Mit einer Wärmepumpe kann das Temperaturniveau in gewünschter Weise angehoben oder abgesenkt werden, so dass eine Nutzung als Heiz- oder Kühlmedium in definierter Weise erfolgen kann.

Das erfindungsgemäße Verfahren ist dadurch gekennzeichnet, dass eine Vielzahl von Wärmetauscheinrichtungen in den Deponiekörper eingebracht werden und dass durch die Wärmetauscheinrichtungen ein Übertragungsfluid geleitet wird, wobei Wärme aus dem Deponiekörper abgeführt und/oder Wärme in den Deponiekörper zugeführt wird. Mit diesem erfindungsgemäßen Verfahren können die zuvor beschriebenen Vorteile erreicht werden.

Besonders bevorzugt ist es nach einer Ausführungsvariante des erfindungsgemäßen Verfahrens, dass die Wärmetauscheinrichtungen während des Aufbaus des Deponiekörpers oder nachträglich in den Deponiekörper eingebracht werden. Bei dem nachträglichen Einbringen können zunächst Bohrungen erstellt werden, welche materialabtragend oder vorzugsweise materialverdrängend erstellt werden. In diesen Bohrungen können dann die Wärmetauscheinrichtungen, insbesondere stabförmige Wärmesonden, eingebracht werden.

Grundsätzlich können die Wärmetauscheinrichtungen an beliebigen Positionen des Deponiekörpers angeordnet sein. Insbesondere kann eine gleichmäßige Verteilung der Wärmetauscheinrichtungen über den Deponiekörper vorgesehen werden. Besonders bevorzugt ist es nach der Erfindung, dass die Wärmetauscheinrichtungen in den Deponiekörper in Bereichen eingebracht werden, in welchen verstärkte mikrobiologische und/oder chemische Abbauprozesse gegeben oder zu erwarten sind. Die Anordnung der Wärmetauscheinrichtungen kann daher etwa von Wärmebildanalysen abhängig gemacht werden.

Eine besonders gute Wärmeübertragung wird nach einer Ausführungsvariante der Erfindung dadurch erreicht, dass in den Deponiekörper Bohrungen eingebracht werden, in welchen die Wärmetauscheinrichtungen als stabförmige Wärmesonden angeordnet werden. Die Wärmesonden können ähnlich Erdwärmesonden ausgebildet sein. Durch Einsatz einer Vergussmasse können die Wärmesonden stoffschlüssig in dem Deponiekörper angeordnet werden, um so eine gute Wärmeübertragung zwischen Deponiekörper und dem Übertragungsfluid zu erreichen.

Eine weitere Verfahrensvariante nach der Erfindung besteht darin, dass die Wärmesonden einen oberen Abschlussabschnitt aufweisen, durch welchen das Übertragungsfluid zu- und abgeführt wird, und dass an dem Anschlusselement eine Entlüftungseinrichtung vorgesehen ist, durch welche Gas aus dem Deponiekörper abgeführt wird. Die Wärmesonden können daher auch zu einer Entlüftung oder Entgasung des Deponiekörpers dienen. Auf diese Weise können umweltschädliche oder gefährliche Gasansammlungen in dem Deponiekörper verhindert werden.

In bevorzugter Weise ist das Verfahren dadurch ausgestaltet, dass das abgeführte Gas aus dem Deponiekörper an der Entlüftungseinrichtung des Anschlussabschnitts gereinigt oder über eine Abführleitung einer weiteren Verwertung zugeführt wird. Auf diese Weise kann Deponiegas entweder umweltschonend abgegeben oder etwa einer thermischen Verwertung zugeführt werden.

Die Erfindung wird nachfolgend anhand von bevorzugten Ausführungsbeispielen weiter erläutert, welche schematisch in den beigefügten Zeichnungen dargestellt sind. In den Zeichnungen zeigen:
- Fig. 1:: eine Querschnittsansicht einer erfindungsgemäßen Anlage zum Abführen von Wärme aus einem Deponiekörper;
- Fig. 2:: eine Querschnittsansicht einer weiteren Ausführung einer erfindungsgemäßen Anlage zum Einleiten von Wärme in einen Deponiekörper;
- Fig. 3:: eine schematische Querschnittsansicht zu einer Wärmesonde für die Erfindung;
- Fig. 4:: eine Querschnittsansicht gemäß dem Schnitt von A-A' von Fig. 3;
- Fig. 5:: eine Seitenansicht eines Anschlussabschnittes für eine Wärmsonde nach der Erfindung;
- Fig. 6:: eine Draufsicht auf den Anschlussabschnitt von Fig. 5;
- Fig. 7:: eine Seitenansicht eines abgewandelten Anschlussabschnittes; und
- Fig. 8:: eine Seitenansicht eines Verteilers für die Erfindung.

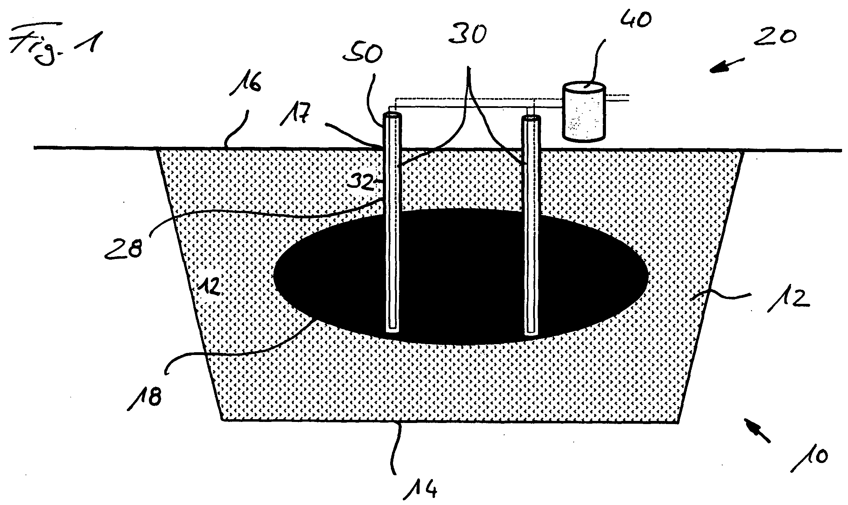

Eine erfindungsgemäße Anlage 20 zum Behandeln einer Deponie 10 mit einem Deponiekörper 12 aus Abfallstoffen ist in Fig. 1 dargestellt. Der wannenartig aufgefüllte Deponiekörper 12 weist eine beispielsweise als Folie ausgebildete Dichtsohle 14 auf, welche den Deponiekörper 12 gegenüber dem angrenzenden Boden flüssigkeitsdicht abgrenzt. Zum Abschluss des Deponiekörpers 12 gegenüber der Atmosphäre ist ein folienartiges Abdichtelement 16 über den gesamten Deponiekörper 12 bis in den angrenzenden Bodenbereich angeordnet.

Aufgrund von biologischen Abbauprozessen und/oder chemischen Prozessen der gelagerten Abfallstoffe weist der Deponiekörper 12 einen warmen Bereich 18 auf. In diesen Bereich 18 sind von der Oberseite des Deponiekörpers 12 als stabförmige Wärmesonden 32 ausgebildete Wärmetauscheinrichtungen 30 eingebracht. Zum Aufnehmen der Wärmesonden 32 sind im Deponiekörper 12 Bohrungen 28 vorgesehen, wobei sich die Wärmesonden 32 von einem unteren Abschnitt des warmen Bereiches 18 durch Durchbrüche 17 in dem Abdeckelement 16 bis zur freien Oberseite der Deponie 10 erstrecken. Über Leitungen sind die Wärmetauscheinrichtungen 30, von welchen zum Zwecke der Übersichtlichkeit lediglich zwei dargestellt sind, mit einem behälterförmigen Verteiler 40 verbunden. Durch die Wärmtauscheinrichtungen 30 wird im Kreislauf ein Übertragungsfluid geführt, durch welches entsprechend dem Prinzip einer Erdwärmesonde Wärme aus dem Deponiekörper 12 abgeführt werden kann.

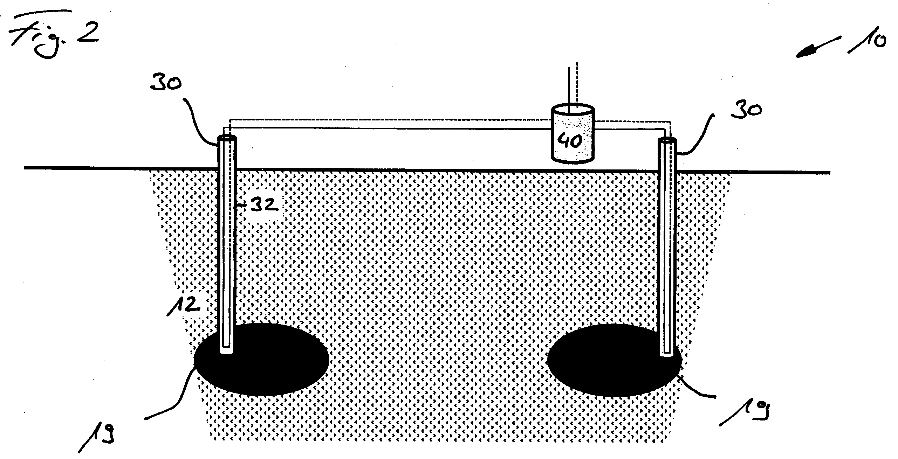

Mit der erfindungsgemäßen Anlage 10 kann entsprechend der Ausführungsform nach Fig. 2 über die Wärmetauscheinrichtungen 30 mit den stabförmigen Wärmesonden 32 auch Wärme in den Deponiekörper 12, insbesondere in kühlere Bereiche 19 eingebracht werden. Auf diese Weise kann eine Deponie 10 thermisch zur Wärmegewinnung oder zur Wärmeabführung, etwa zur Kühlung eines Gebäudes, eines Prozesses oder Infrastruktureinrichtung, genutzt werden. Gleichzeitig besteht die Möglichkeit, über eine gezielte Wärmeabführung und Wärmeeinbringung Abbauprozesse im Deponiekörper 12 zu beeinflussen und zu steuern.

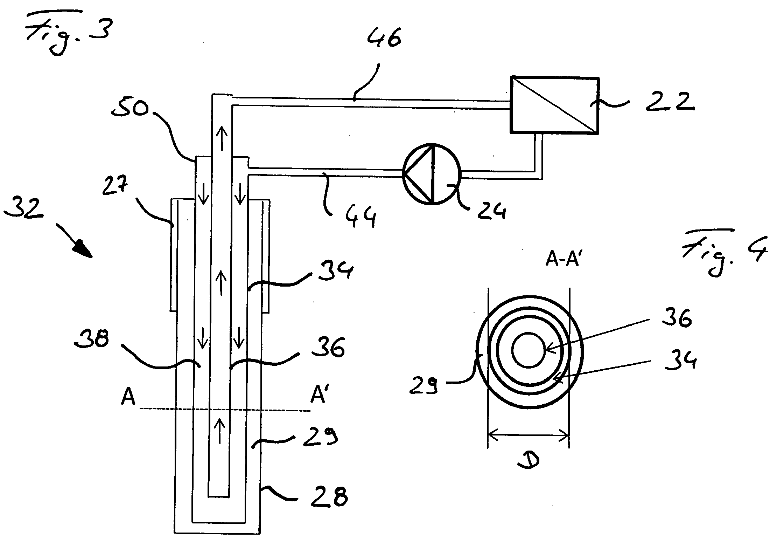

Eine nach der Erfindung vorgesehene Wärmesonde 32 weist gemäß Figuren 3 und 4 einen im wesentlichen koaxialen Aufbau auf. In einem zylindrischen Außengehäuse 34 ist beabstandet zur Innenwand ein Koaxialrohr 36 koaxial zu einer Mittenachse angeordnet, so dass ein Ringkanal 38 zwischen dem Außengehäuse 34 und dem Koaxialrohr 36 gebildet ist. Die Wärmesonde ist in einer schematisch dargestellten Bohrung 28 im Deponiekörper 12 angeordnet, wobei ein Ringraum 29 zwischen dem Außengehäuse 34 und der Wand der Bohrung 28 mit einer aushärtbaren Masse verfüllt ist, welche einen guten wärmeleitenden Kontakt zwischen der Wärmesonde 32 und dem umgebenden Deponiekörper 12 herstellt. In einem oberen Bereich der Bohrung 28 kann ein Stützrohr 27 zur Stabilisierung der Bohrung 28 im oberen Bereich vorgesehen sein.

Mittels einer Pumpeinrichtung 24 wird ein Übertragungsfluid, welches insbesondere Wasser ist, über eine Vorlaufleitung 44 zu einem Anschlussabschnitt 50 der Wärmesonde 32 geleitet. Das Übertragungsfluid strömt durch den Ringkanal 38, wobei Wärme von dem Außengehäuse 34 aufgenommen oder an dieses abgegeben werden kann. Das im ersten Fall erwärmte Vorlaufwasser tritt im Bodenbereich der Wärmesonde 32 in eine untere Eintrittsöffnung des mittigen Koaxialrohres 36 ein und strömt vertikal nach oben zum Anschlussabschnitt 50. Von dort wird es über eine Rücklaufleitung 46 zu einer Wärmepumpe 22 geleitet, durch welche durch ein Anheben des Temperaturniveaus die aufgenommene Wärme abgegeben werden kann. In umgekehrter Weise kann die Wärmepumpe 22 etwa zur Kühlung eines Gebäudes auch Wärme auf das Übertragungsfluid übertragen, so dass dieses über die Wärmesonde 32 an den Deponiekörper 12 abgegeben werden kann. Zum Schließen des Kreislaufes ist die Wärmepumpe 22 wieder mit der Pumpeinrichtung 24 verbunden. Der koaxiale Aufbau der stabförmigen Wärmesonde 32 von Fig. 3 ist aus der Querschnittsdarstellung gemäß Fig. 4 zu erkennen, wobei das zylindrische Außengehäuse 34 einen Durchmesser D aufweist.

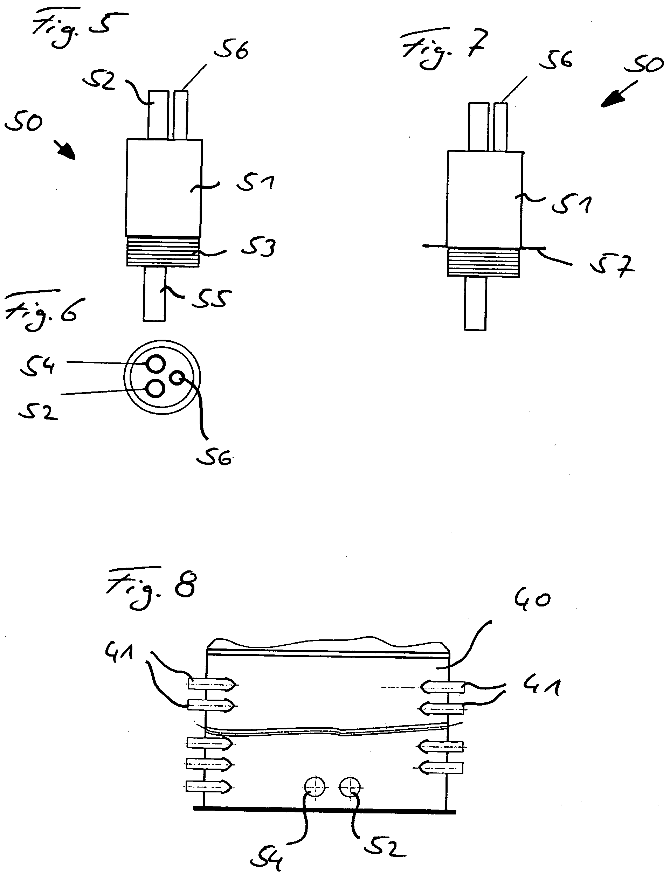

Ein Anschlussabschnitt 50 für eine Wärmesonde 32 ist aus den Figuren 5 und 6 zu ersehen. Der Anschlussabschnitt 50 weist ein hülsenförmiges Gehäuse 51 auf, an dessen deckelartiger Oberseite ein Vorlaufanschluss 52 und ein Rücklaufanschluss 54 zur Verbindung mit der Vorlaufleitung 52 beziehungsweise der Rücklaufleitung 54 vorgesehen sind. Die Rücklaufleitung 54 ist über ein Verbindungsstück 55 mit dem Koaxialrohr 36 strömungsmäßig verbunden. Das hülsenförmige Gehäuse 51 des Anschlussabschnittes 50 weist an einem unteren offenen Bereich ein Gewinde 53 auf, welches auf das Stützrohr 27 im oberen Bereich der Bohrung 28 aufgeschraubt und damit dicht verbunden werden kann. Über entsprechende Verbindungsstücke 55 ist der Vorlaufanschluss 52 mit dem Ringkanal 38 und der Rücklaufanschluss 54 mit dem Koaxialrohr 36 der Wärmesonde 32 strömungsmäßig verbunden.

Innerhalb des becherförmigen Gehäuses 51 befindet sich ein Sammelraum zur Aufnahme von Gas, welches entlang der Bohrung 28 aus dem Deponiekörper 12 nach oben strömen kann. Über eine Lüftungseinrichtung 56 am Deckbereich des Gehäuses 51 kann dieses Gas aus dem hülsenförmigen Gehäuse 51 abgeleitet werden. An der Entlüftungseinrichtung 56 kann vorzugsweise eine Reinigungseinheit, insbesondere ein Aktivkohlefilter angeordnet sein. Zusätzlich oder alternativ ist es möglich, das angefallene Deponiegas über die Entlüftungseinrichtung 56 zu einer Sammelstelle zu fördern, um das Deponiegas insbesondere wärmetechnisch zu verwerten.

Bei der abgewandelten Ausführungsform des Anschlussabschnittes 50 gemäß Fig. 7 ist an der Außenseite des hülsenförmigen Gehäuses 51 oberhalb des Gewindes 53 ein ringförmiger Flansch 57 angeordnet. Der ringförmige Flansch 57, welcher das Gehäuse 51 umgibt, kann zum Anschluss und dichten Verbinden des Anschlussabschnittes 50 mit einem Abdichtelement 16, insbesondere eine Abdeckfolie für den Deponiekörper 12 dienen. Auf diese Weise kann verhindert werden, dass Deponiegas oder andere umweltschädigende oder belästigende Stoffe aus dem Deponiekörper 12 in die Atmosphäre austreten. Gleichzeitig kann durch ein dichtes Anschließen des Anschlussabschnittes 50 an das Abdichtelement 16 des Deponiekörpers 12 verhindert werden, dass in unerwünschter Weise Regenwasser in den Deponiekörper 12 eindringt.

Zur Reduzierung des Aufwandes für Leitungsverbindungen insbesondere bei größeren Deponien ist es nach der Erfindung vorteilhaft, dass mehrere Wärmesonden 32 über behälterförmige Verteiler 40 über eine Vielzahl von Anschlüssen 41 fluidmäßig gekoppelt sind. Der Verteiler 40 kann so in einfacher Weise mit der Pumpeinrichtung 24 oder der Wärmepumpe 22 über eine zentrale Vorlaufleitung 52 beziehungsweise eine zentrale Rücklaufleitung 54 verbunden sein. Der insbesondere zylindrisch ausgebildete Verteiler 40 weist einen Sammelraum für die jeweiligen Leitungsverbindungen auf, wobei der Sammelraum über einen geeigneten Deckel verschlossen ist.

## Patentansprüche

1. Verfahren zum Behandeln einer Deponie mit einem Deponiekörper aus Abfallstoffen,
wobei eine Vielzahl von Wärmetauscheinrichtungen (30) in den Deponiekörper (12) eingebracht ist,
**dadurch gekennzeichnet,**
**dass** mittels einer Pumpeinrichtung (24) und einer Steuereinrichtung durch die Wärmetauscheinrichtungen (30) ein Übertragungsfluid geleitet wird, wobei Wärme dem Deponiekörper (12) zugeführt und die Wärme in dem Deponiekörper (12) gespeichert wird, und
**dass** später die gespeicherte Wärme rückgewonnen und Wärme aus dem Deponiekörper (12) über die Wärmetauscheinrichtungen (30) abgeführt wird.

2. Verfahren nach Anspruch 1,
**dadurch gekennzeichnet,**
**dass** die Wärmetauscheinrichtungen (30) während des Aufbaus des Deponiekörpers (12) oder nachträglich in den Deponiekörper (12) eingebracht werden.

3. Verfahren nach Anspruch 1 oder 2,
**dadurch gekennzeichnet,**
**dass** die Wärmetauscheinrichtungen (30) in den Deponiekörper (12) in Bereichen (18) eingebracht werden, in welchen verstärkte mikrobiologische und/oder chemische Abbauprozesse gegeben oder zu erwarten sind.

4. Verfahren nach einem der Ansprüche 1 bis 3,
**dadurch gekennzeichnet,**
**dass** in den Deponiekörper (12) Bohrungen (28) eingebracht werden, in welchen die Wärmetauscheinrichtungen (30) als stabförmige Wärmesonden (32) angeordnet werden.

5. Verfahren nach Anspruch 4,
**dadurch gekennzeichnet,**
**dass** die Wärmesonden (32) einen oberen Anschlussabschnitt (50) aufweisen, durch welchen das Übertragungsfluid zu- und abgeführt wird, und
**dass** an dem Anschlussabschnitt (50) eine Entlüftungseinrichtung (56) vorgesehen ist, durch welche Gas aus dem Deponiekörper (12) abgeführt wird.

6. Verfahren nach Anspruch 5,
**dadurch gekennzeichnet,**
**dass** das abgeführte Gas aus dem Deponiekörper (12) an der Entlüftungseinrichtung (56) des Anschlussabschnitts (50) gereinigt oder über eine Abführleitung einer weiteren Verwertung zugeführt wird.

7. Verfahren nach einem der Ansprüche 1 bis 6,
**dadurch gekennzeichnet,**
**dass** mittels der Steuereinrichtung abhängig von einer gewünschten Wärmeabfuhr oder Wärmezufuhr die Leistung der Pumpe und die Zu- und Abführung von Übertragungsfluid zu und von den einzelnen Wärmetauscheinrichtungen (30) gesteuert werden.

8. Verfahren nach einem der Ansprüche 1 bis 7,
**dadurch gekennzeichnet,**
**dass** eine Temperatureinstellung des Deponiekörpers (12) erfolgt, wobei über eine gezielte Wärmeabführung und Wärmeeinbringung Abbauprozesse im Deponiekörper (12) gesteuert werden.

9. Anlage zum Behandeln einer Deponie (10) mit einem Deponiekörper (12) aus Abfallstoffen, insbesondere nach einem Verfahren nach einem der Ansprüche 1 bis 8,
wobei eine Vielzahl von Wärmetauscheinrichtungen (30) in den Deponiekörper (12) eingebracht ist, durch welche ein Übertragungsfluid leitbar ist, durch welches Wärme aus dem Deponiekörper (12) abführbar ist,
**dadurch gekennzeichnet,**
**dass** eine Pumpeinrichtung (24) und eine Steuereinrichtung vorgesehen sind, mit welchen den Wärmetauscheinrichtungen (30) gezielt Übertragungsfluid zugeführt wird, und
**dass** durch die Wärmetauscheinrichtungen (30) Wärme in den Deponiekörper (12) zur Wärmespeicherung und späteren Wärmerückgewinnung zuführbar ist.

10. Anlage nach Anspruch 9,
**dadurch gekennzeichnet,**
**dass** die Wärmetauscheinrichtungen (30) in dem Deponiekörper (12) in Bereichen (18) angeordnet sind, in welchen verstärkte mikrobiologische und/oder chemische Abbauprozesse gegeben oder zu erwarten sind.

11. Anlage nach Anspruch 9 oder 10,
**dadurch gekennzeichnet,**
**dass** in den Deponiekörper (12) Bohrungen (28) eingebracht sind, in welchen die Wärmetauscheinrichtungen (30) als stabförmige Wärmesonden (32) angeordnet sind.

12. Anlage nach Anspruch 11,
**dadurch gekennzeichnet,**
**dass** die Wärmesonden (32) einen oberen Anschlussabschnitt (50) aufweisen, durch welchen das Übertragungsfluid zu- und abführbar ist, und
**dass** an dem Anschlussabschnitt (50) eine Entlüftungseinrichtung (56) vorgesehen ist, durch welche Gas aus dem Deponiekörper (12) abführbar ist.

13. Anlage nach Anspruch 12,
**dadurch gekennzeichnet,**
**dass** an der Entlüftungseinrichtung (56) eine Reinigungseinheit angeordnet ist, durch welche abgeführtes Gas aus dem Deponiekörper (12) gereinigt wird.

14. Anlage nach Anspruch 12 oder 13,
**dadurch gekennzeichnet,**
**dass** an der Entlüftungseinrichtung (56) eine Abführleitung vorgesehen ist, durch welche abgeführtes Gas einer weiteren Verwertung zuführbar ist.

15. Anlage nach einem der Ansprüche 9 bis 14,
**dadurch gekennzeichnet,**
**dass** der Deponiekörper (12) mit einem Abdichtelement (16) abgedeckt ist, dass zum Einbringen der Wärmetauscheinrichtungen (30) Durchgänge (17) durch das Abdichtelement (16) vorgesehen sind und
**dass** das Abdichtelement (16) gas- und flüssigkeitsdicht mit Anschlussabschnitten (50) der Wärmetauscheinrichtungen (30) verbunden ist.

16. Anlage nach einem der Ansprüche 9 bis 15,
**dadurch gekennzeichnet,**
**dass** eine Wärmepumpe (22) vorgesehen ist, mit welcher Wärme aus dem Übertragungsfluid abführbar und einer Nutzung zuführbar ist.

## Claims

1. Method for treating a landfill with a landfill body of waste materials,
wherein a plurality of heat exchanging means (30) is introduced into the landfill body (12),
**characterized in that**
by way of a pump means (24) and a control means a transfer fluid is led through the heat exchanging means (30), wherein heat is supplied to the landfill body (12) and the heat is stored in the landfill body (12), and
**in that** at a later stage the stored heat is recovered and heat is removed from the landfill body (12) via the heat exchanging means (30).

2. Method according to claim 1,
**characterized in that**
the heat exchanging means (30) are introduced during the set-up of the landfill body (12) or subsequently into the landfill body (12).

3. Method according to claim 1 or 2,
**characterized in that**
the heat exchanging means (30) are introduced into the landfill body (12) in areas (18), in which intensified microbiological and/or chemical degradative processes are present or are to be expected.

4. Method according to any one of claims 1 to 3,
**characterized in that**
bores (28) are introduced into the landfill body (12), in which the heat exchanging means (30) are arranged as bar-shaped heat probes (32).

5. Method according to claim 4,
**characterized in that**
the heat probes (32) have an upper connecting section (50), through which the transfer fluid is supplied and removed, and
**in that** on the connecting section (50) a ventilation means (56) is provided, through which gas is removed from the landfill body (12).

6. Method according to claim 5,
**characterized in that**
the removed gas from the landfill body (12) is purified at the ventilation means (56) of the connecting section (50) or is supplied via a removal line for further utilization.

7. Method according to any one of claims 1 to 6,
**characterized in that**
by way of the control means, depending on a desired heat removal or heat supply, the capacity of the pump and the supply and removal of transfer fluid to and from the individual heat exchanging means (30) are controlled.

8. Method according to any one of claims 1 to 7,
**characterized in that**
a temperature setting of the landfill body (12) is effected, wherein degradative processes in the landfill body (12) are controlled by a selective heat removal and heat introduction.

9. Installation for treating a landfill (10) with a landfill body (12) of waste materials, in particular pursuant to a method according to any one of claims 1 to 8,
wherein a plurality of heat exchanging means (30) is introduced into the landfill body (12), through which a transfer fluid can be led, by which heat can be removed from the landfill body (12),
**characterized in that**
a pump means (24) and a control means are provided, with which the heat exchanging means (30) can be selectively supplied with transfer fluid, and
**in that** through the heat exchanging means (30) heat can be supplied to the landfill body (12) for heat storage and heat recovery at a later stage.

10. Installation according to claim 9,
**characterized in that**
the heat exchanging means (30) are arranged in the landfill body (12) in areas (18), in which intensified microbiological and/or chemical degradative processes are present or are to be expected.

11. Installation according to claim 9 or 10,
**characterized in that**
bores (28) are introduced into the landfill body (12), in which the heat exchanging means (30) are arranged as bar-shaped heat probes (32).

12. Installation according to claim 11,
**characterized in that**
the heat probes (32) have an upper connecting section (50), through which the transfer fluid can be supplied and removed, and
**in that** on the connecting section (50) a ventilation means (56) is provided, through which gas can be removed from the landfill body (12).

13. Installation according to claim 12,
**characterized in that**
on the ventilation means (56) a purification unit is arranged, through which removed gas from the landfill body (12) is purified.

14. Installation according to claim 12 or 13,
**characterized in that**
on the ventilation means (56) a removal line is provided, through which removed gas can be supplied for further utilization.

15. Installation according to any one of claims 9 to 14,
**characterized in that**
the landfill body (12) is covered by a sealing element (16),
**in that** for introduction of the heat exchanging means (30) passages (17) through the sealing element (16) are provided and
**in that** the sealing element (16) is connected in a gas- and liquid-tight manner to connecting sections (50) of the heat exchanging means (30).

16. Installation according to any one of claims 9 to 15,
**characterized in that**
a heat pump (22) is provided, with which heat can be removed from the transfer fluid and supplied for utilization.

## Revendications

1. Procédé de traitement d'une décharge avec un corps de décharge à partir de déchets, une pluralité de dispositifs d'échange de chaleur (30) étant introduits dans le corps de décharge (12),
**caractérisé :**
**en ce qu'**un fluide de transfert est acheminé à travers les dispositifs d'échange de chaleur (30) au moyen d'un dispositif de pompage (24) et d'un dispositif de commande, de la chaleur étant ainsi amenée jusqu'au corps de décharge (12) et la chaleur étant stockée dans le corps de décharge (12), et
**en ce que** la chaleur stockée est ultérieurement récupérée, et de la chaleur est évacuée du corps de décharge (12) par l'intermédiaire des dispositifs d'échange de chaleur (30).

2. Procédé selon la revendication 1,
**caractérisé :**
**en ce que** les dispositifs d'échange de chaleur (30) sont introduits dans le corps de décharge (12) pendant la mise en place du corps de décharge (12) ou ultérieurement.

3. Procédé selon la revendication 1 ou 2,
**caractérisé :**
**en ce que** les dispositifs d'échange de chaleur (30) sont introduits dans le corps de décharge (12) dans des zones (18) dans lesquelles des processus de dégradation microbiologiques et/ou chimiques renforcés sont effectués ou en attente.

4. Procédé selon une des revendications 1 à 3,
**caractérisé :**
**en ce que**, dans le corps de décharge (12), des alésages (28) sont aménagés, dans lesquels les dispositifs d'échange de chaleur (30) sont disposés en tant que sondes thermiques (32) en forme de tige.

5. Procédé selon la revendication 4,
**caractérisé :**
**en ce que** les sondes thermiques (32) comprennent une partie supérieure de connexion (50), à travers laquelle le fluide de transfert est acheminé et évacué,
et
**en ce que**, sur la partie de connexion (50), un dispositif de purge (56) est prévu, à travers lequel du gaz est évacué du corps de décharge (12).

6. Procédé selon la revendication 5,
**caractérisé :**
**en ce que** le gaz évacué du corps de décharge (12) est épuré au niveau du dispositif de purge (56) de la partie de connexion (50) ou bien est acheminé par une conduite d'évacuation en vue d'une utilisation ultérieure.

7. Procédé selon une des revendications 1 à 6,
**caractérisé :**
**en ce que** la puissance de la pompe et la fourniture et l'évacuation du fluide de transfert vers et en provenance des dispositifs d'échange de chaleur (30) individuels sont, au moyen du dispositif de commande, commandées en fonction d'une évacuation de chaleur souhaitée ou d'un apport de chaleur souhaité.

8. Procédé selon une des revendications 1 à 7,
**caractérisé :**
**en ce qu'**un réglage de température du corps de décharge (12) est effectué, des processus de dégradation dans le corps de décharge (12) étant alors commandés au moyen d'une évacuation de chaleur et d'un apport de chaleur ciblés.

9. Installation de traitement d'une décharge (10) avec un corps de décharge (12) à partir de déchets, plus particulièrement selon un procédé conforme à l'une des revendications 1 à 8,
une pluralité de dispositifs d'échange de chaleur (30) étant introduits dans le corps de décharge (12), par l'intermédiaire desquels peut être acheminé un fluide de transfert au moyen duquel de la chaleur peut être évacuée du corps de décharge (12),
**caractérisée :**
**en ce qu'**un dispositif de pompage (24) et un dispositif de commande sont prévus, avec lesquels le fluide de transfert peut être fourni de manière ciblée aux dispositifs d'échange de chaleur (30), et
**en ce que**, par l'intermédiaire des dispositifs d'échange de chaleur (30), de la chaleur peut être acheminée dans le corps de décharge (12) pour le stockage de la chaleur et pour la récupération de chaleur ultérieure.

10. Installation selon la revendication 9,
**caractérisée :**
**en ce que** les dispositifs d'échange de chaleur (30) sont disposés dans le corps de décharge (12) dans des zones (18) dans lesquelles des processus de dégradation microbiologiques et/ou chimiques renforcés sont effectués ou en attente.

11. Installation selon la revendication 9 ou 10,
**caractérisée :**
**en ce que**, dans le corps de décharge (12), des alésages (28) sont ménagés, dans lesquels les dispositifs d'échange de chaleur (30) sont disposés en tant que sondes thermiques (32) en forme de tige.

12. Installation selon la revendication 11,
**caractérisée :**
**en ce que** les sondes thermiques (32) comprennent une partie supérieure de connexion (50), à travers laquelle le fluide de transfert est acheminé et évacué,
et
**en ce que**, sur la partie de connexion (50), un dispositif de purge (56) est prévu, à travers lequel du gaz est évacué du corps de décharge (12).

13. Installation selon la revendication 12,
**caractérisée :**
**en ce qu'**au niveau du dispositif de purge (56), une unité d'épuration est disposée, au moyen de laquelle du gaz évacué du corps de décharge (12) est épuré.

14. Installation selon la revendication 12 ou 13,
**caractérisée :**
**en ce qu'**au niveau du dispositif de purge (56), une conduite d'évacuation est prévue, par l'intermédiaire de laquelle du gaz évacué peut être acheminé pour une utilisation ultérieure.

15. Installation selon une des revendications 9 à 14,
**caractérisée :**
**en ce que** le corps de décharge (12) est recouvert d'un élément d'étanchéité (16),
**en ce que** des passages (17) sont prévus à travers l'élément d'étanchéité (16) pour l'introduction des dispositifs d'échange de chaleur (30), et
**en ce que** l'élément d'étanchéité (16) est relié de manière étanche aux gaz et aux liquides aux parties de connexion (50) des dispositifs d'échange de chaleur (30).

16. Installation selon une des revendications 9 à 15,
**caractérisée :**
**en ce qu'**une pompe à chaleur (22) est prévue, avec laquelle de la chaleur peut être évacuée du fluide de transfert et peut être acheminée pour être utilisée.
